# EUROPEAN PATENT SPECIFICATION

(11) **EP 3 261 890 B1**
(45) Date of publication and mention of the grant of the patent: **18.08.2021**
(21) Application number: 16754811.4
(22) Date of filing: 23.02.2016
(51) Int. Cl.: B60T 13/68, B60T 13/26

(54) **BRAKE VALVE ARRANGEMENT**
BREMSVENTILBAUGRUPPE
AGENCEMENT DE SOUPAPE DE FREIN

(30) Priority: 23.02.2015 GB 201502980
(43) Date of publication of application: 03.01.2018
(73) Proprietor: KNORR-BREMSE Systeme für Nutzfahrzeuge GmbH, 80809 München (DE)
(72) Inventor: FRY, Matthew, 80809 Munich (DE); MEDERER, Martin, 80809 Munich (DE); LUGMAYR, Markus, 80809 Munich (DE)
(74) Representative: Moore, David Simon
(86) International application number: PCT/IB2016/000492
(87) International publication number: WO 2016/135564

(56) References cited:
- EP-A1- 1 733 943
- GB-A- 2 499 459
- US-A1- 2013 214 588
- US-B2- 7 849 880

## Description

The present arrangement relates to a brake valve arrangement in particular, but not exclusively, for a trailer vehicle or agricultural vehicle.

Existing trailer brake system valve arrangements are known from, for example, WO03011664 which discloses brakes of the front axle of the trailer of a utility vehicle are impinged upon with a brake pressure by way of a single, common ABS valve. Said ABS valve is electrically actuated by an EBS module associated with the rear wheel brakes depending on a differential slip between the front axle and the rear axle. As braking systems become more sophisticated and have additional functionality such as that described in GB2499459 or levelling control, the cost of the brake system tends to increase. An additional problem is that there is increasing pressure on space on trailers due to this functionality as the additional functionality requires additional electrical and pneumatic connections for which there is little space. Trailer builders in addition do not wish to redesign the trailer if this is avoidable and so the compromises in the known systems have been perceived to have a lower reliability due to the additional external connections.

A further problem faced during the installation and servicing of known brake arrangements is the significant amount of tubing required. When the valve is removed or before first installation, the installer is faced with a large number of pipes hanging down and requiring connection. As connectors have become standardised it is very easy, particularly during servicing when identifying marks may be covered with dirt or worn away, to connect up the pipes incorrectly. This can easily lead to valve damage. Examples of such solutions can be found in US4171559 and US2003/0201017.

The present invention therefore seeks to provide a brake valve arrangement that is more compact and lower cost.

According to the invention there is provided a brake valve arrangement configured to be used in a trailer or agricultural vehicle electronic braking system comprising a braking device capable of generating a braking force on a wheel on the trailer, a brake force into the brake cylinders being controllable by a braking ECU, which braking ECU is connected to a standards compliant communication bus on said trailer and is adapted to receive data inputs from sensors on the trailer, wherein the brake valve is provided in the valve arrangement with a pneumatic circuit having a plurality of inputs, which inputs are arranged to be substantially co-planar, wherein a connector plate is provided, which plate is provided with a plurality of pneumatic through connections having an inlet and outlet, wherein the respective outlets are adapted to be connected to the co-planar inlets on the valve. The solution of the invention advantageously enables the safe use of lower cost push fit connections to the valve, which are easier and quicker to use than screw fit connections presently used. It also eliminates the risks of damage to the main valve as if the pneumatic push fit connector is inserted incorrectly causing damage to the connector, only the plate requires changing rather than the valve. This approach also simplifies the testing and assembly of the brake system during manufacture of the trailer.

The solution of the invention further advantageously enables the inclusion of a high level of functionality in the same footprint as existing designs. The design also reduces the installation complexity and installation time thereby resulting in a reduced installed cost compared to the same functionality.

Exemplary embodiments of the invention will now be described in greater detail with reference to the drawings in which:
Fig. 1 shows a pneumatic arrangement of a known trailer braking system
Fig. 2 shows a pneumatic arrangement of a braking system of the invention
Fig. 3 shows a pneumatic arrangement of a first variant of the valve;
Fig. 4 shows a pneumatic arrangement of a second variant
Fig. 5 shows a pneumatic arrangement of a third variant
Fig. 6 shows a connector plate

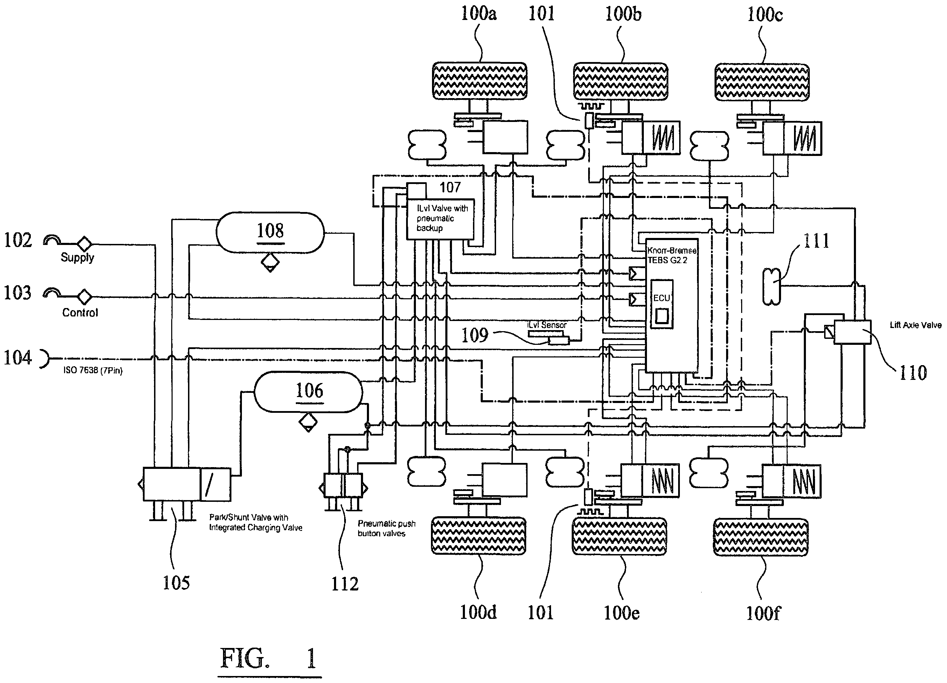

Figure 1 shows a known trailer braking system with levelling control and lift axle control. A conventional utility vehicle full trailer has a steerable front axle with front wheels and three rear axles with rear wheels 100a-f. Rotational wheel speed sensors 101 are in each case assigned to the front wheels and the rear wheels and are connected by way of electric lines with an electropneumatic brake pressure control module which is primarily assigned to the rear axle brakes. One brake is in each case assigned to the front wheels brakes to the rear wheels, which brakes can be applied by means of brake cylinders of the front axle or spring-loaded brake cylinders of the rear axle.

The braking system of the trailer vehicle can be connected by way of three connections, specifically a pneumatic supply line connection 102, a pneumatic control line connection 103 and an electric control connection 104, with the braking system of a tractor or a further trailer. The electric control line is a seven pin ISO 7638 connection, which provides the ISO 11992 CAN data connection on pins 6 and 7.

The supply line connection is connected by way of a park shunt valve 105 with an air brake reservoir 106. From the air brake reservoir, a pneumatic line leads to a supply input of the pressure control module/ECU. The pressure control module is provided with an integral electronic control unit.

Furthermore, pneumatic axle load sensors or air bellows are provided at the rear axle and permit a determination of the axle load, particularly of the dynamic axle load during braking and starting. The axle load sensors or air bellows are connected by way of pneumatic lines with the levelling control.

To provide stability control a lateral acceleration sensor is provided, which may also be integrated with a yaw sensor, and the output of the lateral acceleration sensor is fed to the pressure control module/ECU. Typically the lateral acceleration sensor is integrated into the pressure control module/ECU. In the event that lateral acceleration on the trailer is detected, the pressure control module can provide for increased brake force at the front and/or rear axles. When the lateral acceleration sensor detects lateral acceleration on the trailer in which it is installed, the sensor generates a signal setting the stability control to active.

To provide levelling control, a levelling control valve 107 is provided. Due to the additional air use required in levelling control a second reservoir 108 connected to the supply is provided, which is pneumatically connected to the levelling control valve 107. The levelling control valve is further pneumatically connected to each of the air bags and controls the flow of air into and exhaust of air from the air bags.

The levelling control valve is provided with pneumatic control inputs from push buttons on a push button valve 112, the air for which is supplied by the reservoir 106. Further electrical and pneumatic control is provided from the pressure control module/electronic control unit. A levelling sensor 109 to determine the height of the trailer is electrically connected to the pressure control module/ECU.

A lift axle control valve 110 is provided, which is supplied with air from the additional reservoir and has a further pneumatic connection with the levelling control valve and a further airbag 111. An electrical connection to the pressure control module/ECU provides the control for the lift axle solenoid.

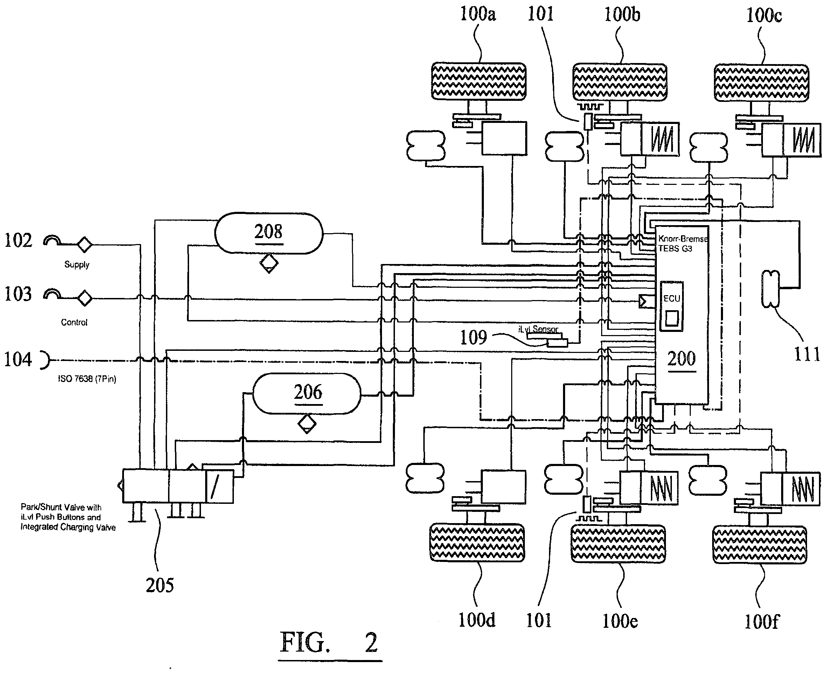

Figure 2 shows a pneumatic arrangement according to the invention. As with the arrangement the utility vehicle full trailer has three rear axles with rear wheels 110a-f. Rotational wheel speed sensors 101 are in each case assigned to the left wheels and the right wheels and are connected by way of electric lines with an electropneumatic brake pressure control module/ECU 200 which is primarily assigned to the rear axle brakes. One brake is in each case assigned to the left wheels and the right wheels, which brake can be applied by means of brake cylinders of the front axle or spring-loaded brake cylinders of the rear axle.

The braking system of the trailer vehicle can be connected by way of three connections, specifically a pneumatic supply line connection 102, a pneumatic control line connection 103 and an electric control connection 104, with the braking system of a tractor or a further trailer. The electric control line is a seven pin ISO 7638 connection, which provides the ISO 11992 CAN data connection on pins 6 and 7.

The supply line connection is connected by way of a park shunt valve with push button controls 205 with a first air brake reservoir 206 and a second reservoir 208. From the air brake reservoir 206, a pneumatic line leads to a supply input of the pressure control module/ECU. The second reservoir 208 is provided with first and second pneumatic inputs to the pressure control module/ECU. Further two pneumatic inputs are provided directly from the park shunt valve with push buttons and charging valve 205 to the pressure control module/ECU 200. The pressure control module is provided with an integral electronic control unit. The reservoir is provided with first and second pneumatic connections with the pressure control module/ECU to provide additional air flow capacity to the inlet ports 11 and 12 for the relay valves.

Furthermore, pneumatic axle load sensors or air bellows are provided at the rear axle and permit a determination of the axle load, particularly of the dynamic axle load during braking and starting. The axle load sensors or air bellows are connected by way of pneumatic lines with the pressure control module. The air bag for the lift axle control is also directly controlled from the pressure control module/ECU 200.

To provide levelling control, a levelling control sensor 109 is provided, the output of which is fed to the pressure control module/ECU. In use, the pressure control module/ECU 200 then controls the flow of air into the air bags to raise and lower the trailer in accordance with the user inputs from the push buttons or alternatively in accordance with any instructions received from a remote device via the CAN bus.

As can be readily visible from Figure 2, the arrangement of the invention results in greatly simplified pneumatic and electrical connections compared with the known approach.

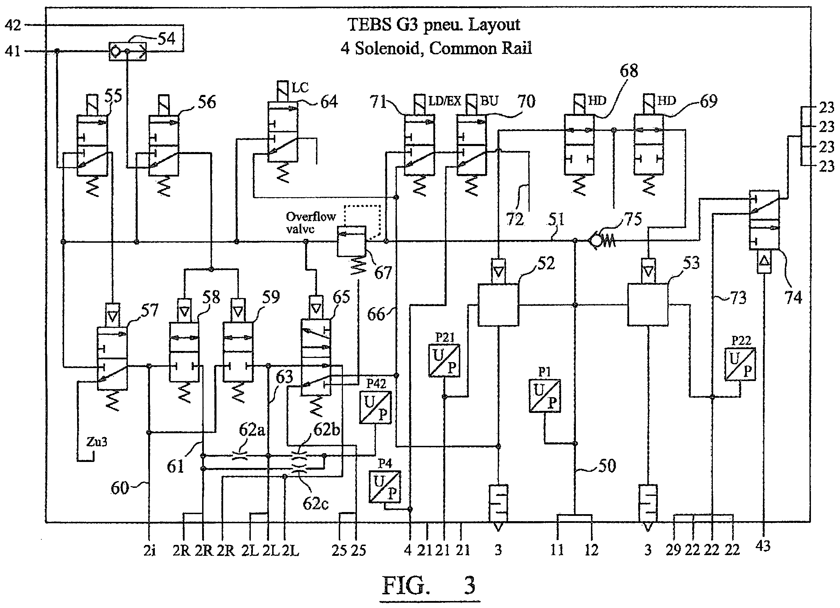

Figure 3 shows a pneumatic arrangement of the brake valve having two modulators. The valve arrangement is provided with a pneumatic input via the ports 11 and 12, which are connected to the trailer reservoir (not shown) to enable air flow into the valve. The inlet ports 11 and 12 are connected to conduit 50, which leads to a common rail conduit 51. The conduit 50 is also pneumatically connected to EBS relay valves 52, 53 and well as pressure transducer PI, which measures the pressure on the inlet conduit to provide a control signal for the valve control electronics.

The pneumatic arrangement controls the levelling function, the lift axle and the electronic braking system. The solenoids operable to control these functions are each connected to the common rail conduit 51.

The levelling control is provided with an air suspension raise input 41 in pneumatic connection with a first solenoid 55 and an air suspension lower input 42 which is in pneumatic connection with the raise input 41 and the first solenoid 55 via a double check valve 54. The double check valve 54 is also connected with a second solenoid 56. The raise and lower solenoids are connected with the common rail 51. The first solenoid 55 is connected to the pilot input of the levelling exhaust valve 57, which exhaust is further in pneumatic connection with the common rail 51.The second valve 56 is connected to the control ports of first levelling hold valve 58 and second levelling hold valve 59. The first and second levelling hold valves are connected to a conduit 60 in communication with port 2i, which is the suspension control by an external valve for two point levelling control. The conduit 60 is connected to the exhaust valve 57 to enable the hold valves 58 and 59 to be exhausted via valve 57.

Each of the hold valves is connected to a respective two air suspension bellows on the trailer 2R and 2L. Thus the first hold valve 58 controls the right side air bellows and the second hold valve 59 controls the left side air bellows. The conduit 61 from the right hand hold valve 58 to its respective bellows is connected via choke 62a to the conduit 63 from the second hold valve 59 to its respective bellows. Transducer 42 is connected to this conduit to provide an electronic control signal, which in turn is connected via choke 62b to the conduit 63 and via choke 62c to the conduit 61. To facilitate lift axle control, the third set of bellows on the left and right is controlled by the lift axle control described in detail below.

The lift axle control 3/2 solenoid 64 is also connected to the common rail 51, an output of which solenoid 64 pilots the liftaxle air pilot valve 65 which is also in fluid communication with the common rail 51. A further output of the lift axle solenoid is connected to the exhaust conduit 66 of the EBS solenoids as described below. An output of the valve 65 is connected via conduit 63 with the air suspension bellows 2L and 2R and a further output of the valve 65 is connected to first and second lift bellows 25 to provide the lift axle control. The valve 65 is also connected to the exhaust conduit 66 which leads to exhaust port 3.

The common rail 51 is provided with an overflow valve 67, which is biased against the lift axle control and levelling control so that the braking function is always given priority with respect to available air pressure.

The EBS functionality is provided by first and second hold solenoids 68, 69 and load exhaust valve 71 and back up valve 70. The back up valve 70 is connected to the main brake pressure inlet 4, which is also provided with a pressure transducer P4. The back up valve 70 is further connected to each of the hold solenoids 68, 69 via conduit 72 and to the load exhaust solenoid 71. The load exhaust solenoid is provided with connections to the common rail 51 and the conduit 66. The hold solenoid 68 is connected to the pilot port of the relay valve 52 and the solenoid 69 is connected to the pilot port of the relay valve 53.

The relay valve 52 is connected to the exhaust 3 and also to the three brake delivery ports 21 and is provided with a pressure transducer 21 in that conduit to the ports 21 to measure the delivery pressure. The relay valve 53 is connected to a separate exhaust 3 and via conduit 73 to the three brake delivery ports 22. A pressure transducer P22 is provided to measure the pressure in the conduit to the ports 22. A test port 29 is also provided here to provide a test port for measuring brake pressure.

The emergency relay park valve 74 is also in fluid communication with conduit 73 and is connected by a check valve 75 to the common rail 51. The valve 74 provides the delivery pressure to the spring park brake ports 23 and is piloted by park brake emergency pressure input 43.

The valve is provided with four electrical connectors. The first connector is a 7 pin ISO 7638 connector to the tractor. The pins are provided with the following functions: 1 battery; 2 ignition; 3 electronic ground; 4 valve ground; 5 warning light; 6 CAN high; 7 CAN low.

The second connector is a 12 pin connector for auxiliary function input output (AuxIO). With this connector, pins are assigned to the stop light, a 5V CAN bus to enable communication to components such as a Trailer Info-Module such as the Applicant's TIM or Haldex's Info-centre ®; pins are further assigned to the power supply and the remaining pins are available for AuxIO.

The third connector is a 6 pin connector with pins for power and CAN connections to 3^{rd} and 4^{th} modulators if they are required by the trailer builder and wheel speed sensors. The fourth connector is a further 6 pin connector with pins assigned to an analogue to digital convertor and AuxIO controls for auxiliary functions.

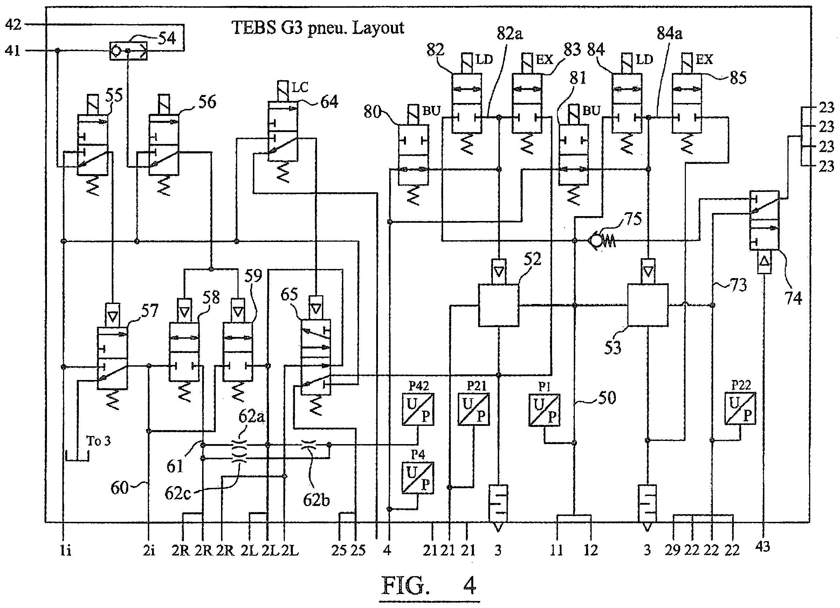

Figure 4 shows a second variant of the valve having 6 solenoids to provide 3 modulators for a 4S/3M brake system.

The functionality of the electronic level control and the lift axle control as well as the park valve is essentially the same as described with respect to Figure 3 where the same parts are labelled with the same reference numbers.

The arrangement of the braking solenoids will now be described in greater detail. As with the embodiment of Figure 3, the valve arrangement of Figure 4 is provided with a pneumatic input via the ports 11 and 12, which are connected to the trailer reservoir (not shown) to enable air flow into the valve. The inlet ports 11 and 12 are connected to conduit 50. The conduit 50 is also pneumatically connected to EBS relay valves 52, 53 and well as pressure transducer PI, which measures the pressure on the inlet conduit to provide a control signal for the valve control electronics.

The conduit 50 branches and provides the inlet pressure to first and second load solenoids 82, 84, which solenoids are pneumatically connected to a respective first and second exhaust solenoid 83, 85 via respective conduits 82a and 84a. The first exhaust solenoid is exhausted via a common path with the relay valve 52 and the auxiliary functions. The second solenoid is exhausted via a common path with the relay valve 53.

Two back up valves 80 and 81 are provided, each of which back up valves is connected to the main brake pressure inlet 4, which is also provided with a pressure transducer P4. The back up valves 80, 81 are further connected to conduits 82a and 84a, each of which is also in pneumatic connection with the control ports of the respective relay valves 52 and 53.

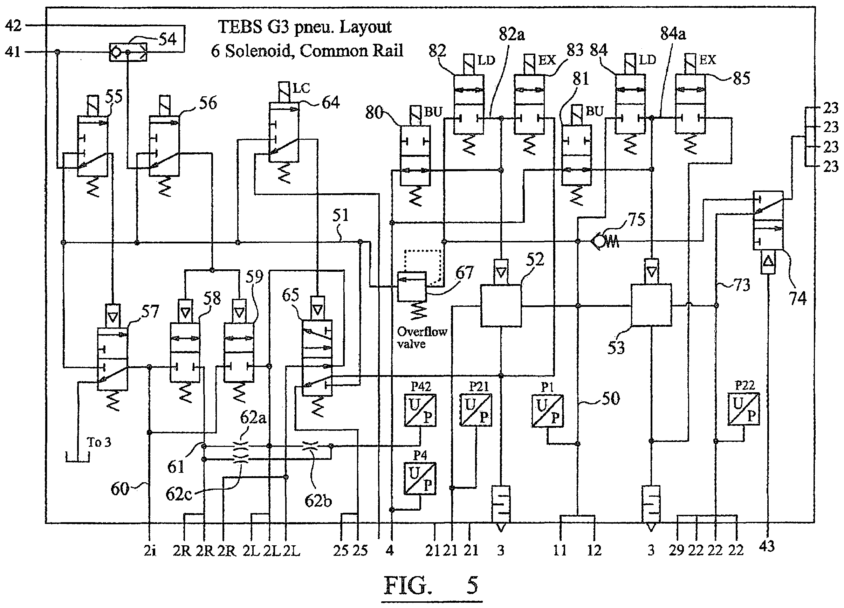

Figure 5 shows an alternative to the arrangement of Figure 4. As with the embodiment of Figure 3 and Figure 4, the valve arrangement of Figure 5 is provided with a pneumatic input via the ports 11 and 12, which are connected to the trailer reservoir (not shown) to enable air flow into the valve. The inlet ports 11 and 12 are connected to conduit 50. The conduit 50 is also pneumatically connected to EBS relay valves 52, 53 and well as pressure transducer PI, which measures the pressure on the inlet conduit to provide a control signal for the valve control electronics.

The conduit 50 leads to the common rail 51 and provides the inlet pressure to first and second load solenoids 82, 84, which solenoids are pneumatically connected to a respective first and second exhaust solenoid 83, 85 via respective conduits 82a and 84a. The first exhaust solenoid is exhausted via a common path with the relay valve 52 and the auxiliary functions. The second solenoid is exhausted via a common path with the relay valve 53.

Two back up valves 80 and 81 are provided, each of which back up valves is connected to the main brake pressure inlet 4, which is also provided with a pressure transducer P4. The back up valves 80, 81 are further connected to conduits 82a and 84a, each of which is also in pneumatic connection with the control ports of the respective relay valves 52 and 53.

The levelling control is provided with an air suspension raise input 41 in pneumatic connection with a first solenoid 55 and an air suspension lower input 42 which is in pneumatic connection with the raise input 41 and the first solenoid 55 via a check valve 54. The check valve 54 is also connected with a second solenoid 56. The raise and lower solenoids are connected with the common rail 51. The first solenoid 55 is connected to the pilot input of the levelling exhaust valve 57, which exhaust is further in pneumatic connection with the common rail 51.

The second valve 56 is connected to the control ports of first levelling hold valve 58 and second levelling hold valve 59. The first and second levelling hold valves are connected to a conduit 60 in communication with port 2i, which is the suspension control by an external valve for two point levelling control. The conduit 60 is connected to the exhaust valve 57 to enable the hold valves 58 and 59 to be exhausted via valve 57.

Each of the hold valves is connected to a respective two air suspension bellows on the trailer 2R and 2L. Thus the first hold valve 58 controls the right side air bellows and the second hold valve 59 controls the left side air bellows. The conduit 61 from the right hand hold valve 58 to its respective bellows is connected via choke 62a to the conduit 63 from the second hold valve 59 to its respective bellows. Transducer 42 is connected to this conduit to provide an electronic control signal, which in turn is connected via choke 62b to the conduit 63 and via choke 62c to the conduit 61. To facilitate lift axle control, the third set of bellows on the left and right is controlled by the lift axle control described in detail below.

The lift axle control 3/2 solenoid 64 is also connected to the common rail 51, an output of which solenoid 64 pilots the liftaxle air pilot valve 65 which is also in fluid communication with the common rail 51. A further output of the lift axle solenoid is connected to the exhaust conduit 66 of the EBS solenoids as described below. An output of the valve 65 is connected via conduit 63 with the air suspension bellows 2L and 2R and a further output of the valve 65 is connected to first and second lift bellows 25 to provide the lift axle control. The valve 65 is also connected to the exhaust conduit 66 which leads to exhaust port 3.

The common rail 51 is provided with an overflow valve 67, which is biased against the lift axle control and levelling control so that the braking function is always given priority with respect to available air pressure.

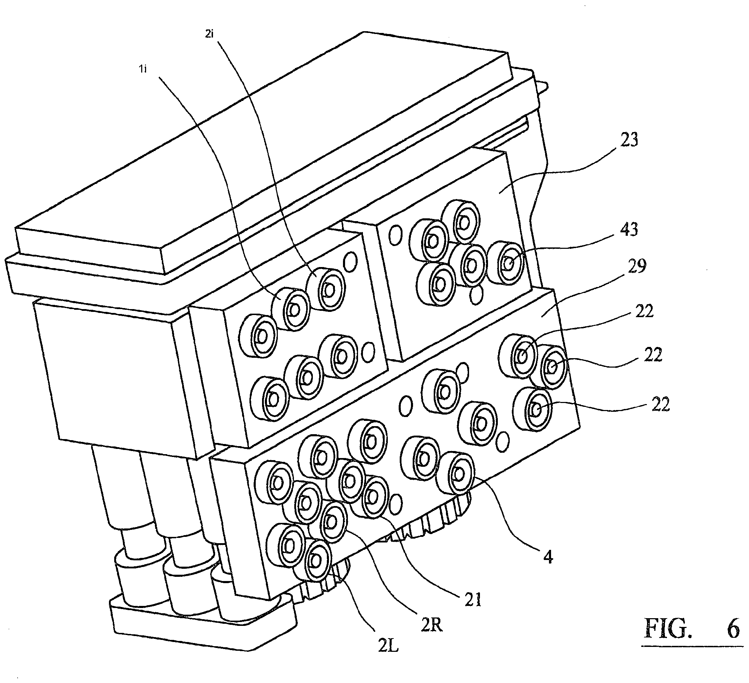

Figure 6 shows a connector or pressure distribution plate for the pneumatic inlet and exhausts of the valve arrangement shown in Figures 3 to 5. In the arrangements of Figures 3 to 5, each of the ports on the valve arrangement is arranged so as to be substantially co-planar, i.e. they are all on the same face of the valve.

The connector plate comprises a plate adapted to interface with a valve of the type described with reference to figures 1 and 5, although those valves are merely exemplary. The compact arrangement of the valves enables all of the valve's inlet ports to be located on one face of the valve. The inlet ports can then mate with the push fit connectors of the connector plate.

The connector plate shown schematically in Figure 6 with the ports labelled with the reference numerals shown in Figures 3 to 5. The air suspension raise and lower ports 41, 42 are located on the upper left side adjacent to the ports 1i and 2i and the lift axle control ports 25. The spring park brake ports 23 and park brake / emergency pressure input 43 are located on the upper right hand side. The brake delivery ports 22 are located on the bottom right hand side adjacent to the test port 29 and the main inlet ports 4, 11, 12. The air suspension ports 2R and 2L are located on the left-hand bottom side adjacent to the brake inlet ports 21. As can be seen from Figures 3 to 5, behind the respective ports 21, 22, 25 and at least two of the respective ports 2L and 2R, a plurality of ports leads to a respective single orifice on the valve. The enables a greater flexibility in the design of the valve enabling the same parts to be used in production for single to multiple axle trailers, thereby reducing costs. Thus the plate represents a many to one arrangement.

The arrangement of the plate has a further advantage in that the push to fit connectors are fitted on to the plate and not directly into the casting. Therefore should a push to fit connector become broken or be roughly inserted, the damage to the connector is on the plate rather than on the valve casting. This further simplifies the repair reducing the costs and downtime significantly as damage to the orifices on the casting would require the valve to be reassembled rather than simply the plate replaced.

The invention overcomes the difficulty presented by the original solution and ensures the safety and the cost effectiveness of the system are equally provisioned.

## Claims

1. A brake valve arrangement configured to be used in a trailer electronic braking system comprising a
braking device capable of generating a braking force on a wheel on the trailer, a brake force into the brake cylinders being controllable by a braking ECU, which braking ECU is connected to a standards compliant communication bus on said trailer and is adapted to receive data inputs from sensors on the trailer, wherein the brake valve is provided with a pneumatic circuit having a plurality of inputs
**characterised in that**
said inputs are arranged to be substantially co-planar, wherein a connector plate is provided in the brake valve arrangement,
which plate is provided with a plurality of pneumatic through connections having an inlet and outlet (4, 22, 1i, 2i, 2L, 2R, 21, 41, 42, 43), wherein the respective outlets are adapted to be connected to the co-planar inlets on the valve, wherein a plurality of the inputs (2L, 2R) on the connector plate connect to a first input on the valve.

2. A brake valve arrangement according to Claim 1, wherein a further plurality of the inputs on the connector plate connect to a second input on the valve.

3. A brake valve arrangement according to Claim 1, wherein the pneumatic through connections comprise push fit connectors, which connectors connect to the plate but not directly to the valve body.

4. A brake valve arrangement according to any one of Claims 1 to 3, wherein the plate outlets are connected to the co-planar inlets by means of an O-ring.

## Patentansprüche

1. Bremsventil-Baugruppe zum Gebrauch in einer elektronischen Anhängerbremsanlage, umfassend eine zur Erzeugung einer Bremskraft an einem Rad am Anhänger befähigte Bremsvorrichtung, wobei eine in die Bremszylinder eingeleitete Bremskraft von einer elektronischen Bremssteuereinheit geregelt werden kann, die an einen normgerechten Kommunikationsbus am besagten Anhänger angeschlossen und zum Empfang von Dateneingängen von Sensoren am Anhänger ausgelegt ist, wobei das Bremsventil mit einem Druckluftkreislauf mit einer Vielzahl von Eingängen versehen ist,
**dadurch gekennzeichnet, dass**
die besagten Eingänge im Wesentlichen koplanar angeordnet sind, wobei in der Bremsventil-Baugruppe eine Anschlussplatte mit einer Vielzahl von pneumatischen Durchgangsverbindungen mit einem Einlass und einem Auslass (4, 22, 1i, 2i, 2L, 2R, 21. 41, 42, 43) vorgesehen ist, wobei die jeweiligen Auslässe zum Anschluss an die koplanaren Einlässe am Ventil ausgelegt sind, wobei eine Vielzahl der Eingänge (2L, 2R) an der Anschlussplatte an einen ersten Eingang am Ventil anzuschließen ist.

2. Bremsventil-Baugruppe nach Anspruch 1, wobei eine weitere Vielzahl der Eingänge an der Anschlussplatte an einen zweiten Eingang am Ventil anzuschließen ist.

3. Bremsventil-Baugruppe nach Anspruch 1, wobei die pneumatischen Durchgangsverbindungen Steckverbinder umfassen, die an die Platte aber nicht direkt an den Ventilkörper anzuschließen sind.

4. Bremsventil-Baugruppe nach einem der Absprüche 1 bis 3, wobei die Plattenausgänge mittels eines O-Rings an die koplanaren Eingänge angeschlossen sind.

## Revendications

1. Agencement de soupape de frein configuré pour être utilisé dans un système de freinage électronique de remorque comprenant un dispositif de freinage capable de générer une force de freinage sur une roue sur la remorque, une force de frein dans les cylindres de frein pouvant être commandée par un bloc de commande électronique de freinage, lequel bloc de commande électronique de freinage est connecté à un bus de communication conforme aux normes sur ladite remorque et est adapté à recevoir des entrées de données de capteurs sur la remorque, dans lequel la soupape de frein est pourvue d'un circuit pneumatique ayant une pluralité d'entrées,
**caractérisé en ce que**
lesdites entrées sont agencées pour être essentiellement co-planaires, dans lequel une plaque de connecteur est prévue dans l'agencement de soupape de frein, laquelle plaque est pourvue d'une pluralité de connexions transversales pneumatiques ayant une entrée et sortie (4, 22, 1i, 2i, 2L, 2R, 21, 41, 42, 43), dans lequel les sorties respectives sont adaptées à être connectées aux entrées co-planaires sur la soupape, dans lequel une pluralité des entrées (2L, 2R) sur la plaque de connecteur se connectent à une première entrée sur la soupape.

2. Agencement de soupape de frein selon la revendication 1, dans lequel une autre pluralité des entrées sur la plaque de connecteur se connectent à une seconde entrée sur la soupape.

3. Agencement de soupape de frein selon la revendication 1, dans lequel les connexions transversales pneumatiques comprennent des connecteurs à ajustage correct, lesquels connecteurs se connectent à la plaque mais pas directement au corps de soupape.

4. Agencement de soupape de frein selon l'une quelconque des revendications 1 à 3, dans lequel les sorties de plaque sont connectées aux entrées co-planaires au moyen d'un joint torique.
